# DEMANDE DE BREVET EUROPEEN

(11) **EP 2 168 660 A1**
(43) Date de publication de la demande: **31.03.2010**
(21) Numéro de dépôt: 09290723.7
(22) Date de dépôt: 23.09.2009
(51) Int. Cl.: B01D 53/26, B01D 53/22, B01D 65/02

(54) **Procédé et installation pour le traitement d'un flux d'air comprimé**

(30) Priorité: 24.09.2008 FR 0805233
(71) Demandeur: Del Barba, Willy, 75009 Paris (FR)
(72) Inventeur: Del Barba, Willy, 75009 Paris (FR)
(74) Mandataire: Sauvage, Renée

(57) **Abrégé**

D'une manière connue en soi, l'air comprimé est soumis à un processus de séparation physique (8,10a,10b) des particules solides et gouttelettes de liquide avant passage au travers d'un dispositif de séchage à membrane (14). Selon l'invention, il est interposé, entre le processus de séparation physique (8,10a,10b) et le passage au travers du dispositif de séchage à membrane (14;30), une étape de chauffage (12) de l'air comprimé, vaporisant toute humidité résiduelle contenue dans ledit air.

## Description

La présente invention concerne un procédé et une installation pour le traitement d'un flux d'air comprimé en vue de sa fourniture à un réseau.

La présence d'humidité dans l'air comprimé entraînant des phénomènes de corrosion et d'autres problèmes tels que la croissance possible de microorganismes, quand ce n'est pas purement et simplement la formation de condensats, il importe de débarrasser, autant que possible, cet air de l'humidité qu'il contient, avant sa fourniture, par exemple, à un système de commande pneumatique. A défaut, on s'expose à des dysfonctionnements et à une usure prématurée du système.

Il a donc été proposé de soumettre l'air comprimé à un passage au travers d'un dispositif de séchage à membrane, après avoir "dégrossi" le séchage par mise en oeuvre d'un processus de séparation physique des gouttelettes de liquide.

Plus précisément, l'air comprimé passe au travers d'un séparateur centrifuge qui, à la manière d'un cyclone, sépare de l'air les plus grosses particules et gouttelettes, après quoi l'air passe au travers d'un premier filtre qui sépare des particules et gouttelettes plus fines, puis au travers d'un second filtre qui sépare des particules et gouttelettes encore plus fines.

Ce processus de traitement n'aboutit cependant pas à éliminer toute trace d'eau à l'état liquide. Or la venue en contact d'eau liquide avec la membrane du dispositif de séchage à membrane en réduit la durée de vie utile en ce sens qu'elle entraîne une obstruction des pores et permet, par combinaison avec les contaminants gazeux (soufrés ou chlorés) se trouvant dans l'air qui alimente le compresseur, la formation d'acides qui détruisent les pores de la membrane. Ajoutons à cela que, lorsque l'installation est utilisée à l'extérieur (par exemple, dans des trains), l'eau liquide résiduelle peut geler et affecter le fonctionnement du système.

Il a été envisagé d'ajouter d'autres filtres d'ouverture de maille de plus en plus petite pour piéger les gouttelettes les plus minuscules mais un tel ajout entraîne une perte de charge inacceptable, outre le coût qu'il représente et l'entretien qu'il demande.

Il existe donc un besoin en une solution simple, économique et n'entraînant aucune perte de charge permettant d'éliminer, de l'air comprimé, toute trace d'eau en phase liquide au moment où il pénètre dans le dispositif de séchage à membrane.

Une telle solution est apportée par la présente invention en ce sens qu'elle prévoit d'interposer, entre le processus de séparation physique et le passage au travers du dispositif de séchage à membrane, une étape de chauffage de l'air comprimé, vaporisant toute humidité résiduelle contenue dans ledit air.

Ainsi, le dispositif de séchage à membrane n'est plus exposé aux agressions et dommages mentionnés ci-dessus.

Dans un mode de mise en oeuvre du procédé selon l'invention, l'étape de chauffage est mise en oeuvre par passage au travers d'une enceinte chauffée électriquement.

Dans un autre mode de mise en oeuvre du procédé, qui est d'ailleurs préféré, l'étape de chauffage est mise en oeuvre par passage au travers d'une enceinte où s'opère un échange thermique avec un fluide chaud, lequel est avantageusement constitué par tout ou partie de l'air comprimé tel qu'il se trouve avant soumission au processus de séparation physique.

Dans ce cas, il n'est pas besoin d'apport d'énergie extérieur pour parachever le séchage avant l'admission de l'air comprimé dans le dispositif séparateur à membrane.

L'invention étend sa portée à une installation pour la mise en oeuvre du procédé décrit ci-dessus, installation qui comporte principalement, et d'une manière connue en soi, un compresseur, un ensemble de séparation physique de particules solides et gouttelettes de liquide, un dispositif de séchage à membrane et une chambre d'évacuation d'air comprimé sec. L'installation se caractérise par le fait qu'est interposée, entre l'ensemble de séparation physique et le dispositif de séchage à membrane, une enceinte de chauffage de l'air comprimé.

Dans une première variante, l'enceinte de chauffage de l'air comprimé est pourvue de moyens de chauffage électrique.

Dans une seconde variante, l'enceinte de chauffage de l'air comprimé renferme des moyens permettant l'écoulement d'un fluide d'échange thermique, tels qu'un serpentin, une double paroi, etc., alimentés, de préférence, par tout ou partie de l'air comprimé tel qu'il sort du compresseur.

Le dispositif de séchage à membrane définit, pour la circulation de l'air comprimé, des passages à parois poreuses qui communiquent avec un espace interstitiel ménagé entre lesdites parois pour l'évacuation de l'humidité résiduelle portée, en phase vapeur, par l'air comprimé. Cette humidité résiduelle, en phase vapeur, s'échappe au travers desdites parois vers l'espace interstitiel. D'une manière connue en soi, l'espace interstitiel est en communication avec une source d'air chaud à des fins de balayage.

Selon l'invention, la chambre d'évacuation d'air comprimé sec comporte un conduit en communication avec l'espace interstitiel, ce conduit étant muni de moyens de chauffage et étant alimenté, à des fins de balayage de l'espace interstitiel, par une fraction de l'air comprimé séché tel qu'en sortie desdits passages.

Lesdits moyens de chauffage dont est muni le conduit sont des moyens de chauffage électriques ou des moyens permettant l'écoulement d'une fraction de l'air comprimé tel qu'il sort du compresseur.

Dans ce dernier cas, l'installation permet de sécher l'air comprimé avec un pourcentage d'air de balayage inférieur à celui nécessité dans le cas du système traditionnel.

L'air de balayage étant plus sec et chaud, il est possible d'atteindre un point de rosée plus bas, ce qui favorise le maintien en phase gazeuse de l'eau se trouvant dans l'espace interstitiel.

L'invention sera mieux comprise à la lecture de la description ci-après faite en référence aux dessins annexés dans lesquels :
- la figure 1 schématise une première forme d'exécution de l'installation selon l'invention,
- la figure 2 schématise une seconde forme d'exécution de l'installation selon l'invention, et
- la figure 3 schématise une troisième forme d'exécution de l'installation selon l'invention.

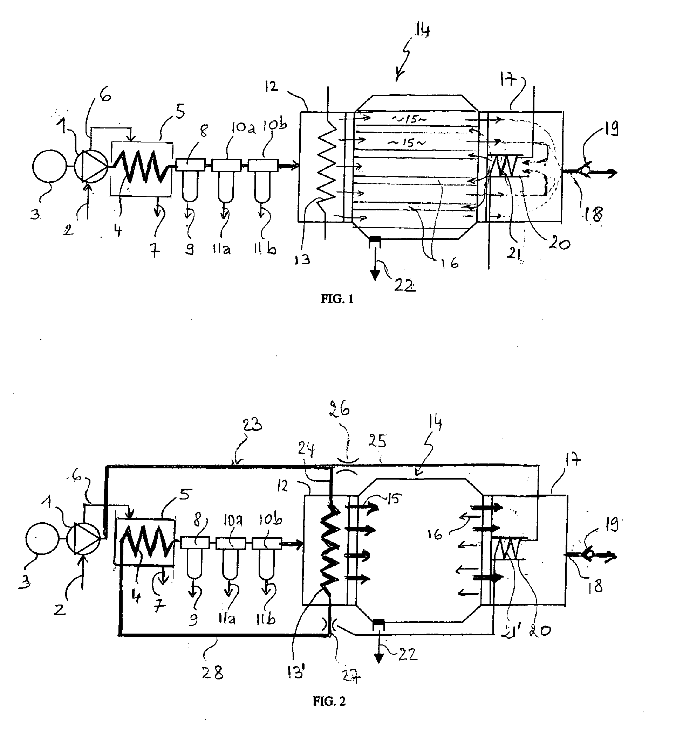

A la figure 1, il est représenté en 1 un compresseur, alimenté en air selon 2 et entraîné par un moteur 3. L'air comprimé par le compresseur 1, et réchauffé par la compression, en sort pour passer dans un échangeur 4 inclus dans une enceinte 5 tandis que l'air non comprimé sortant du compresseur 1 selon 6, sensiblement à la température ambiante, est admis dans l'enceinte 5 pour en ressortir selon 7. De cette manière, l'air comprimé est refroidi dans l'échangeur 4. L'objectif de ce refroidissement est, d'une part, d'épargner aux composants en aval une exposition à une température susceptible de nuire à leur fonctionnement ou à leur durée de vie et, d'autre part, de provoquer la condensation des contaminants qui seraient en phase gazeuse, ou tout au moins à la réunion de micro-gouttelettes en plus grosses gouttelettes pour faciliter leur séparation.

L'air comprimé, ainsi refroidi, passe ensuite dans un séparateur centrifuge 8 pour en séparer les éventuelles particules et gouttelettes d'eau et éventuellement d'huile qui y sont en suspension. Le séparateur centrifuge 8 est purgé selon 9. Du séparateur centrifuge 8, l'air comprimé passe dans une paire de filtres 10a et 10b, d'une ouverture de maille allant en décroissant du filtre 10a au filtre 10b, destinés à retenir les particules et gouttelettes. Les filtres 10a et 10b sont purgés selon 11a et 11b.

L'installation, telle que décrite jusqu'ici, est classique.

Selon l'invention, l'air comprimé sortant du filtre 10b pénètre dans une enceinte 12 chauffée, par exemple, par une résistance électrique 13, ce chauffage ayant pour but de vaporiser les traces d'humidité encore présentes en phase liquide dans l'air comprimé, sans toutefois atteindre des températures préjudiciables aux composants en aval.

C'est donc un air comprimé dépourvu de toute eau liquide qui pénètre dans un dispositif de séchage à membrane désigné par 14. Ce dispositif peut être assimilé à un faisceau de micro-tubes poreux ménageant entre eux un espace interstitiel. Cette structure a été grossièrement illustrée à la figure 1 pour faciliter la compréhension : les passages offerts par les micro-tubes sont désignés par 15 et l'espace interstitiel ménagé entre les parois des micro-tubes est désigné par 16. L'air comprimé traverse le dispositif de séchage à membrane 14 en empruntant les passages 15, l'humidité résiduelle en phase gazeuse traversant la paroi des micro-tubes, sous l'effet de la mise à l'atmosphère de l'espace interstitiel 16, pour se retrouver dans ledit espace. L'air comprimé sec sort du dispositif de séchage à membrane 14 pour pénétrer dans une chambre 17 pourvue, d'une part, d'une sortie d'air comprimé 18 munie d'un clapet anti-retour 19 et, d'autre part, d'un conduit 20 ouvert côté chambre 17 et en communication avec l'espace interstitiel 16. Un échangeur thermique 21, par exemple une résistance électrique, est logé dans le conduit 20.

La plus grande partie de l'air comprimé sec issu du dispositif de séchage à membrane 14 sort de la chambre 17 selon 18 tandis qu'une autre partie traverse le conduit 19, en étant réchauffé au passage par l'échangeur 21, pour pénétrer dans l'espace interstitiel 16. Cette fraction d'air comprimé réchauffé, d'une part, assèche la paroi extérieure des micro-tubes et, d'autre part, entraîne vers l'évacuation 22 l'humidité en phase gazeuse qui est passée au travers desdites parois vers l'espace interstitiel 16.

Dans la forme d'exécution illustrée à la figure 2, les éléments déjà décrits à propos de la figure 1 sont désignés par les mêmes références et ils ne seront pas de nouveau décrits.

L'installation de la figure 2 diffère de celle de la figure 1 par le fait que c'est l'air comprimé chaud qui assure la fourniture de calories en 13' et 21'.

Plus précisément, au lieu de pénétrer immédiatement dans l'enceinte 5 à la sortie du compresseur 1, l'air comprimé chaud est dirigé dans une conduite 23 qui se ramifie selon 24 et 25. Un gicleur 26, placé sur la branche 25 immédiatement en aval du point de ramification, gêne le passage de l'air comprimé chaud vers la branche 25, de sorte que la majeure partie de cet air emprunte la branche 24 et passe dans un serpentin 13' inclus dans l'enceinte 12, serpentin duquel il ressort en traversant un injecteur 27 qui lui redonne de la pression et l'envoie selon 28 dans le serpentin 4 où il est refroidi par l'air ambiant provenant, selon 6, du compresseur 1.

Comme dans la forme d'exécution de la figure 1, l'air comprimé refroidi est soumis à l'action du séparateur centrifuge 8 et des filtres 10a et 10b, est réchauffé dans l'enceinte 12, emprunte les passages 15 des micro-tubes, débouche dans la chambre 17 pour finalement, être évacué en majeure partie selon 18.

Une fraction de cet air comprimé sec n'est cependant pas évacuée selon 18 mais aspirée vers l'espace interstitiel 16 pour la même raison et avec le même effet que précédemment.

A la différence de la forme d'exécution de la figure 1, cette fraction d'air est réchauffée dans le conduit 20, non pas par une résistance électrique, mais par un serpentin 21' dans lequel circule la partie de l'air comprimé qui, au niveau du point de ramification de la conduite 23, a franchi le gicleur 26. L'air sortant du serpentin 21' est réinjecté dans la conduite 28 au niveau de l'injecteur 27.

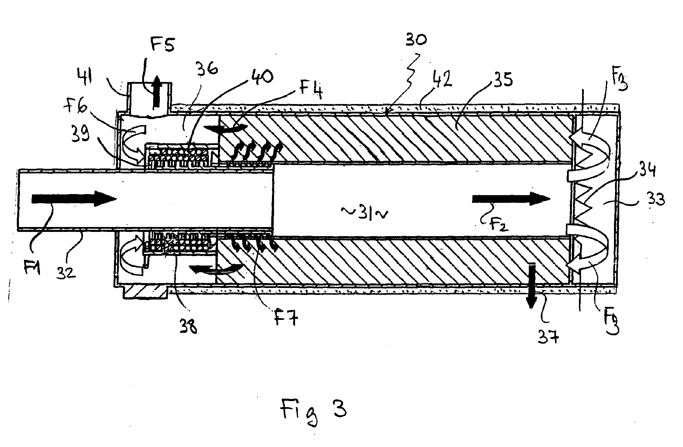

Dans la forme d'exécution de la figure 3, le dispositif séparateur à membrane 30 est tubulaire et il définit un passage central 31 en communication, d'une part, avec un tube d'entrée d'air comprimé 32, branché dans ledit passage central et situé en aval, par exemple, du séparateur centrifuge et des filtres (non représentés) et, d'autre part, avec une enceinte 33 incluant un moyen de chauffage, tel qu'une résistance électrique 34. La garniture 35 du séparateur à membrane 30 communique, d'une part, avec l'enceinte chauffée 33 et, d'autre part, avec une chambre d'évacuation 36 dont la sortie est indiquée en 41. La "membrane" est, en fait, constituée d'un faisceau de membranes ménageant, entre elles, un espace interstitiel qui débouche à l'extérieur par une sortie 37. La chambre 36 renferme un conduit 38, dans lequel est branché le tube d'entrée d'air comprimé 32, l'ensemble des deux définissant un espace tubulaire qui communique, d'un côté, avec le volume intérieur de ladite chambre d'évacuation 36 et, d'un autre côté, avec l'espace interstitiel du dispositif séparateur à membrane 30. Cet espace annulaire renferme un gicleur 39 et est chauffé par un moyen de chauffage quelconque 40. Une couche isolante 42, entourant l'ensemble formé de la succession de la chambre d'évacuation 36, du dispositif séparateur à membrane 30 et de l'enceinte chauffée 33, calorifuge ledit ensemble.

Le fonctionnement de cette forme d'exécution est le suivant :

L'air comprimé entrant, selon F1, dans le tube 32 traverse le passage central 31, selon F2, pour entrer dans l'enceinte chauffée 33, où sa température est augmentée. De là, il passe, selon F3, dans le dispositif séparateur à membrane 30 où il se décharge de son eau résiduelle en phase gazeuse, laquelle passe dans l'espace interstitiel ménagé entre les faisceaux de membranes 35. L'air asséché atteint la chambre d'évacuation 36, selon F4, et sort, en majeure partie, par la sortie 41 selon F5. Une fraction de cet air est cependant recyclée, selon F6, au travers du gicleur 38 où elle est réchauffée, puis renvoyée comme air de balayage, selon F7, dans l'espace interstitiel. Ce faisant, cette fraction de l'air assèche la paroi extérieure des faisceaux de membranes 35 et entraîne, vers la sortie 37, l'eau en phase gazeuse qui se trouve dans l'espace interstitiel.

Comme il ressort de ce qui précède, l'invention apporte un procédé et des installations simples et économiques.

Il est bien entendu que l'invention n'est pas limitée aux formes d'exécution décrites et représentées. En particulier, l'installation pourrait combiner certains aspects des formes d'exécution des figures 1 et 2. Plus précisément, l'air comprimé sortant du compresseur 1 pourrait, en majeure partie être dirigée directement dans l'enceinte 5 comme à la figure 1, une fraction étant toutefois dérivée, comme à la figure 2, pour alimenter le serpentin 13'. Dans ce cas, la sortie du serpentin 13' pourrait être raccordée au circuit entre l'enceinte 5 et le séparateur centrifuge 8. Dans une autre variante, l'air comprimé sortant du compresseur 1 pourrait, en majeure partie, être dirigé directement dans l'enceinte 5 comme à la figure 1, une fraction étant toutefois dérivée, comme à la figure 2, mais pour alimenter directement le serpentin 21', lequel pourrait être raccordé au circuit entre le filtre 10b et l'enceinte chauffée 12. Celle-ci serait alors du type représenté de la figure 1.

## Revendications

1. Procédé de traitement d'un flux d'air comprimé en vue de sa fourniture à un réseau, du type comprenant la soumission de l'air comprimé à un processus de séparation physique (8,10a,10b) des particules solides et gouttelettes de liquide avant passage au travers d'un dispositif de séchage à membrane (14;30), **caractérisé en ce qu'**est interposée, entre le processus de séparation physique (8,10a,10b) et le passage au travers du dispositif de séchage à membrane (14;30), une étape de chauffage de l'air comprimé, vaporisant toute humidité résiduelle contenue dans ledit air.

2. Procédé selon la revendication 1, **caractérisé en ce que** ladite étape de chauffage est mise en oeuvre par passage au travers d'une enceinte (12;33) chauffée électriquement (13;34).

3. Procédé selon la revendication 1, **caractérisé en ce que** ladite étape de chauffage est mise en oeuvre par passage au travers d'une enceinte (12) où s'opère un échange thermique avec un fluide chaud (13').

4. Procédé selon la revendication 3, **caractérisé en ce que** ledit fluide chaud est constitué par tout ou partie de l'air comprimé tel qu'il se trouve avant soumission au processus de séparation physique (8,10a,10b).

5. Installation pour la mise en oeuvre du procédé selon l'une quelconque des revendications 1 à 4, du type comportant un compresseur (1), un ensemble de séparation physique (8,10a,10b) de particules solides et gouttelettes de liquide, un dispositif de séchage à membrane (14;30) et une chambre d'évacuation d'air comprimé sec (17;36), **caractérisée en ce qu'**est interposée, entre l'ensemble de séparation physique (8,10a,10b) et le dispositif de séchage à membrane (14;30), une enceinte (12;33) de chauffage de l'air comprimé.

6. Installation selon la revendication 5, **caractérisée en ce que** l'enceinte (12;33) de chauffage de l'air comprimé est pourvue de moyens de chauffage électrique (13;34).

7. Installation selon la revendication 5, **caractérisée en ce que** l'enceinte (12) de chauffage de l'air comprimé renferme des moyens permettant l'écoulement d'un fluide d'échange thermique.

8. Installation selon la revendication 7, **caractérisée en ce que** les moyens permettant l'écoulement d'un fluide d'échange thermique sont alimentés par tout ou partie de l'air comprimé tel qu'il sort du compresseur (1).

9. Installation selon l'une quelconque des revendications 5 à 8, dans laquelle, d'une manière connue en soi, le dispositif de séchage à membrane (14;30) définit, pour la circulation de l'air comprimé, des passages à parois (15;35) poreuses qui communiquent avec un espace interstitiel (16) ménagé entre lesdites parois pour l'évacuation de l'humidité résiduelle portée, en phase vapeur, par l'air comprimé et s'échappant au travers desdites parois vers ledit espace interstitiel (16), ledit espace interstitiel (16) étant en communication avec une source d'air chaud à des fins de balayage, **caractérisée en ce qu'**elle comporte un conduit (20;38) en communication avec ledit espace interstitiel, ledit conduit étant muni de moyens de chauffage (21, 21';40) et étant alimenté, à des fins de balayage de l'espace interstitiel, par une fraction de l'air comprimé séché tel qu'en sortie desdits passages.

10. Installation selon la revendication 9, **caractérisée en ce que** lesdits moyens de chauffage dont est muni ledit conduit (20) sont des moyens de chauffage électrique (21) ou des moyens (21') permettant l'écoulement d'une fraction de l'air comprimé tel qu'il sort du compresseur (1).

11. Installation selon la revendication 9, **caractérisée en ce que** lesdits moyens de chauffage dont est muni ledit conduit (20) sont des moyens (21') permettant l'écoulement d'une fraction de l'air comprimé tel qu'il sort du compresseur (1).

12. Installation selon l'une quelconque des revendications 5 à 11, **caractérisée en ce que** le dispositif de séparation à membrane (30) et, éventuellement, l'enceinte de chauffage (33) sont calorifugés (42).
